# EUROPEAN PATENT APPLICATION

(11) **EP 4 112 757 A1**
(43) Date of publication of application: **04.01.2023**
(21) Application number: 21183240.7
(22) Date of filing: 01.07.2021
(51) Int. Cl.: C22B 3/18, C22B 1/00, C22B 3/44, C22B 26/12

(54) **A BIO-BASED PROCESS FOR EXTRACTING METALS FROM BATTERIES**

(71) Applicant: BRAIN Biotech AG, 64673 Zwingenberg (DE)
(72) Inventor: Kuippers, Gina, 69469 Weinheim (DE); Gabor, Esther, 64673 Zwingenberg (DE); Gauert, Marc, 68535 Edingen-Neckarhausen (DE)
(74) Representative: Daniels, Stefanie Lisa

(57) **Abstract**

Suggested is a method for recovering metals from batteries comprising or consisting of the following steps:
(a) providing black mass prepared from spent batteries;
(b) providing a culture of microorganisms obtained by using suitable carbon sources to support growth and the production of organic acids, complexing agents or reducing agents;
(c) bringing said black mass into contact with said culture of microorganisms or the cell-free supernatant of said culture of microorganisms;
(d) depleting said black mass from metals contained therein by bioleaching;
(e) separating the depleted black mass from the liquid containing the dissolved metals to obtain a pregnant leach solution;
(f) recovering the extracted metals from said pregnant leach solution

## Description

### FIELD OF INVENTION

The present invention is related to the area of bioleaching and discloses a CO₂-efficient process for recovering metals from active battery components ("black mass") using specific microorganisms and a setup suitable for conducting the process.

### STATE OF THE ART

The recycling of batteries, particularly lithium-ion batteries (LIBs), is of major interest in terms of resource efficiency and sustainability. The use of LIBs has seen an exponential growth in the past 20 years and production is expected to be more than 10 million tons in 2030. LIBs are used in many applications, particularly in portable devices, such as cameras, mobile phones and laptops, and as an energy source in electronic vehicles (EVs). Experts expect EVs to become the dominant source of spent LIBs for recycling in the coming ten years. Battery production makes up for 20% of the total energy consumed for manufacturing an EV and approximately for 40% of the CO₂ released by an EV during its entire life [WARBURG ET AL., Report of ADEME, Angers (FR), 25 (2013); available online: https://www.ademe.fr/elaboration-selon-principes-acv-bilans-energetiquesemissions-gaz-a-effet-serre-autres-impacts-environnementaux (accessed on 15 March 2021)]. LIB recycling could reduce the carbon footprint of EVs by more than 50%, particularly if sustainable recycling methods are used.

Of particular value and life cycle impact are the electrode materials of rechargeable batteries, generally referred to as LIBs that comprise critical metals, such as lithium and cobalt, but also nickel, copper, manganese, aluminum and iron. Five major categories of cathode materials are to-date commercially available: lithium-cobalt oxide (LCO), lithium-nickel-manganese-cobalt (NMC), lithium-manganese oxide (LMO), lithium-nickel-aluminum oxide (NCA), and lithium-iron phosphate (LFP). Currently, the most important materials in the market are NMC, LCO and LFP. The most important anode material is graphite, lithium-titanate (LTO) is used for specific applications, and metallic Li is expected to expand its marketability in the next decade. Both cathodes and anodes consist of pastes of compounds bound together by intercalation with organic binders such as polyvinylidene fluoride (PVDF) and are coated on electronic conductors. Typically, Al and Cu foils are the preferred cathode and anode current collectors, respectively.

The electrode materials of a battery (the so-called active materials) are separated from the housing materials and insulator foils either by mechanical means after discharging or by direct pyrometallurgical processes or a combination thereof. The resulting mixture is called "black mass". Commercially, pyrometallurgical treatment is predominantly used due to process simplicity and robustness, costs and flexibility of use. However, the environmental impact of this approach is significant, some metals, such as lithium, cannot be recovered and hydrometallurgical treatment steps are additionally required to separate the metals from the black mass.

In hydrometallurgical LIB recycling, black mass is produced by mechanical means, sometimes in combination with treatment steps at elevated temperatures (calcination/roasting or smelting). Black mass is then further processed by chemical extraction with mostly acids and sometimes by use of alkaline solutions, leading to the extraction of target metals. Hydrometallurgical processes allow for the separation and recovery of different elements (Co, Li, Ni, Mn, Cu) as single element compounds or as mixtures.

In an early scientific paper on hydrometallurgical LIB recycling published in 1998 [ZHANG ET AL., Hydrometallurgy, 47:259 (1998)], the authors describe highest extraction efficiencies for lithium and cobalt by hydrochloric acid compared to other mineral acids such as sulfuric acid. Processes using nitric acid as a leaching reagent are also described. HNO₃ can be used for the selective extraction of particularly Li if no reducing agent is added [GUAN ET AL., ACS Sustain. Chem. Eng., 5:1026 (2017)]. With a reducing agent, usually H₂O₂, the extraction efficiencies of Co, Mn and Ni is increased. While sulfuric acid and hydrochloric acid leaching can also be used for LFP cathodic materials, whereas nitric acid does not seem to be suitable.

The most commonly studied leaching method is based on sulfuric acid. It is also the only one that is currently used on a commercial scale [LAROUCHE ET AL, Materials, 13:801 (2020**)].** Many patents have been issued in this field, e.g. by Tedjar [TEDJAR, F. **World Patent** WO 2003021708 A2 (2003**)].** In these processes, the presence of a reducing agent is important for accelerating leaching kinetics. Most often, H₂O₂ is used due to its high efficiency, followed by glucose and sulfites.

Mishra et al. [MISHRA ET AL. Waste Management 28, 333 (2008**)]** disclosed the bioleaching of spent LIBs by *Acidithiobacillus ferrooxidans* that produces sulfuric acid and ferric iron to mediate the dissolution of Co and Li. A similar approach was described by Han et al. (HAN ET AL., Chinese Patent CN102560114B (2012**)**]**.** They contacted the chemolithotrophic, acidophilic microorganism with the active material in shaking cultures, which lead to the extraction of up to 65% of cobalt and about 10% of lithium. Applicable pulp densities were limited, however, and leaching kinetics were very slow compared to the use of pure sulfuric acid (up to 15 days to reach maximal extraction), mainly due to the toxic effects of the extracted metals.

Several organic acids have the advantage of higher selectivity, biodegradability and weaker material corrosion as compared to inorganic acids [LAROUCHE ET AL, Materials, 13:801 (2020**)**]**.** Citric acid in combination with H₂O₂ is as efficient in the extraction of LIB metals as inorganic acid [LI ET AL, Waste Manag. 71:362 (2018**)**]**.** Formic acid and H₂O₂ [ZHENG ET AL, RSC Adv. 8:8990 (2018**)**] allow for the quantitative extraction of Li and Co at 60°C in only 20 min. Also the combination of reducing agent and acetic acid is a promising leaching agent for NMC dissolution due to the high solubility of lithium acetate. Further organic acids suitable for LIB recycling comprise, but are not limited to: oxalic acid, succinic acid, maleic acid, ascorbic acid, tartaric acid, glycine, and gluconic acid.

Organic acid leaching is not yet established on an industrial scale due to the generally higher costs of these agents compared to sulfuric acid. Therefore, it has been the object of the present invention to provide a method to supply organic acids for LIB recycling in a cost-effective and particularly sustainable way. The solution we provide consists of using microorganisms that produce single organic acids or blends of different organic acids, complexing agents or reducing agents from easily available, renewable carbon sources instead of using pure acids that are generally produced from fossil resources and need cost- and energy-intense purification. The renewable carbon sources may be from agricultural production or, preferably, constitute waste materials from industrial production processes, such as raw glycerin from bioethanol production, molasses, food and agricultural wastes and carbon-rich waste waters, but also carbon dioxide as produced in industrial processes, such as cement production and incineration plants.

In this context, reference is made to Kim et al. who used fungi for the bioleaching of spent Zn-Mn or Ni-Cd batteries [KIM ET AL., Waste Management 51, 168 (2016**)**]**.** In this study, *Aspergillus* species were cultivated in suitable growth media and used to extract metals from the electrode materials. The chemistry of alkaline batteries, however, is very different from LIB chemistry and no bioleaching with microorganisms producing organic acids, complexing agents or reducing agents has been disclosed so far.

Bioleaching may be carried out in direct contact of microbial cells and LIB material (one-step bioleaching) or in a two-step bioleaching process, where the microbial production of active compounds is temporally and/or spatially separated from the LIB leaching.

Microorganisms able to produce organic acids, complexing agents or reducing agents on organic substrates or carbon dioxide are known in the literature and comprise species from many different groups of microorganisms, such as bacteria, yeasts, fungi, algae and archaea. The present invention discloses a group of bacteria and a group of fungi that are particularly well suited for the process.

In the microbiological production of organic acids, the recovery and concentration of these compounds from the culture supernatants is the most energy-as well as cost-intensive step, accounting for 30 to 60% of the overall production costs [STRAATHOF, Comprehensive Biotechnology, Second Edition. Elsevier Inc., pp. 811-814 (2011**);** LI ET AL., J. Microbiol. Biotechnol., 26:1 (2016**);** MURALI ET AL., Fermentation, 3:22 (2017**)**]. Therefore, it has been the object of the present invention to provide a method that operates at ambient temperature (below 80°C) and low pressure (below 3 bar), and that allows the usage of culture supernatant or culture broth either directly or after moderate concentration instead of using pure organic acids.

Furthermore, it is desirous to provide a solution that allows to extract as much target metals as possible, in particular at least 50% of the target metal content. A further prerequisite is to recover high yields of target metals within short time, thus a much more favorable leaching kinetics is required when compared to autotrophic bioleaching processes.

Another prerequisite of the present invention has been providing a process using microorganisms tolerating high metal concentrations, particularly of Co, Li, Ni, Cu, Al, Fe, and Mn.

Finally, for safety reasons, all microorganisms involved in the process need to belong to risk class 1, since in the future no technical process will pass approval from governmental health and risk authorities involving microorganisms belonging to risk class 2 or even higher.

### SHORT DESCRIPTION OF THE FIGURES

**Figure 1****:** Schematic drawing of microbial CO₂-fixation and acetate production by first microorganism in vessel R1; transfer of acetate into vessel R2 with second microorganism for acid production; transfer of acid from vessel R2 via filtration step to leaching vessel for depletion step; filtration of leachate to generate pregnant leach solution (PLS); metal separation from PLS via known techniques (i.e. adsorption, pH shift) and recycling of spent medium for vessel R2.
**Figure 2****:** Schematic drawing of one-step process. Microorganisms, medium and black mass in one reactor R1 for one-step leaching; followed by filtration of leachate to generate pregnant leach solution (PLS) and metal separation from PLS via known techniques (i.e. adsorption, pH shift) and recycling of spent medium for vessel R1.
**Figure 3****:** Schematic drawing of two-step process. Microbial acid production in vessel R1, followed by transfer via filter to leaching vessel for depletion step (leaching); transfer of pregnant leach solution (PLS) via filtration step to metal separation unit for metal recovery by known techniques (i.e. adsorption, pH shift) and spent medium recycling for vessel R1.
**Figure 4****:** Comparison of supernatant microbially produced by *Acetobacterium woodii* with inorganic and organic acids in leaching of black mass (5% w/v). Molarity of acids: 622 mM. (*) contained 1.1% (v/v) H₂SO₄.
**Figure 5****:** Comparison of supernatants microbially produced by *Ustilago trichophora* with pure malic acid in leaching of black mass material (10%) for 20 h.
**Figure 6****:** Tea leaves (shredded, 1% w/v) and H₂O₂ (1% v/v) were used to leach black mass in combination with a range of organic acids.
**Figure 7****:** Production of malic acid from crude glycerol with *Ustilago trichophora* in fed-batch and perfusion fermentation, 7A: 500 ml shake flask culture; 7B: 1 liter fermentation.
**Figure 8****:** Production of malic acid from sugar beet syrup with *Ustilago trichophora* in fed-batch and perfusion fermentation. 8A: 500 ml shake flask culture; 8B: 1 liter fermentation.
**Figure 9****:** Production of malic acid and succinate from acetate with *Ustilago trichophora* in a fed-batch fermentation process.

### DESCRIPTION OF THE INVENTION

The object of the present invention is directed to a bio-based method for recovering metals from batteries, particularly lithium ion batteries (LIBs) comprising or consisting of the following steps:
(a) providing black mass prepared from spent batteries;
(b) providing a culture of microorganisms obtained by using suitable carbon sources to support growth and the production of organic acids, complexing agents or reducing agents;
(c) bringing said black mass into contact with said culture of microorganisms or the cell-free supernatant of said culture of microorganisms;
(d) depleting said black mass from metals contained therein by bioleaching;
(e) separating the depleted black mass from the liquid containing the dissolved metals to obtain a pregnant leach solution (PLS);
(f) recovering the extracted metals from said pregnant leach solution.

It has been observed that the accommodation of steps (a) to (f) provides a process, which fulfils all needs as described in the previous section: the process according to the present invention allows the selective extraction of metals from spent batteries in a safe and sustainable way while being economically viable.

The method can be used in a continuous process setup or in a batch process setup.

Particularly useful has been found a fungal microorganism termed *Ustilago trichophora* in terms of performance in the production of different organic acid blends when grown on carbon-comprising waste streams. When sugar beet syrup, crude glycerol from biodiesel production, sodium acetate or pomace from vegetable/fruit processing were used, the formation of various organic acids, in particular the ratio of malic acid to succinic acid, could be influenced. By using different carbon sources to proliferate *Ustilago trichophora,* deposited as NBRC 100155, NBRC 100156, NBRC 100157, NBRC 100158, NBRC 100159, NBRC 100160 or CBS 131473, the organic acid blend can be tailored to bioleach selected target metals according to the specific process requirements. The microorganism yields sufficiently high concentrations of organic acids to allow direct extraction of metals from black mass without an upstream concentration step. Additionally, *Ustilago trichophora* belongs to biosafety level 1, which makes it an organism easy to handle with respect to safety in a production environment.

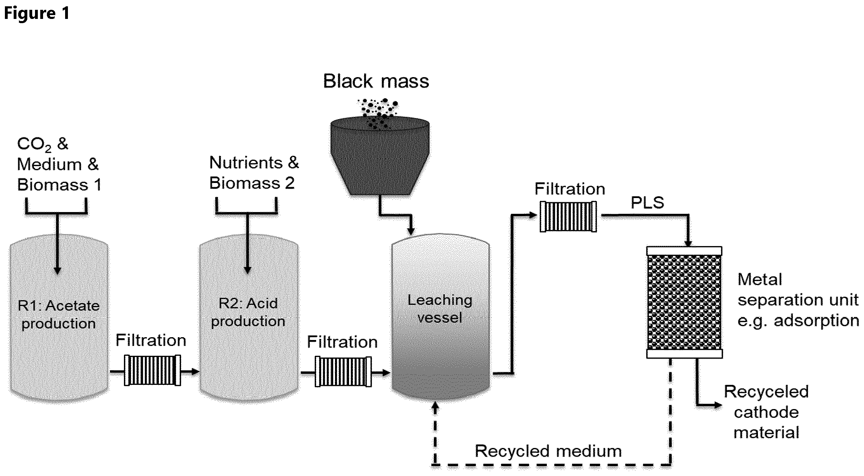

Another particularly useful microorganism is *Acetobacterium woodii,* such as deposited as DSM 1030. This organism yields sufficiently high concentrations of organic acids, particularly acetate, to allow direct extraction of metals from black mass without an upstream concentration step when grown on carbon dioxide. Alternatively, acetate produced by *A. woodii* can be used as a substrate for a second microorganism for the production of other organic acids or organic acid blends. For example, with *Ustilago trichophora,* the formation of nearly equal proportions of malic acid and succinic acid was demonstrated using the carbon source acetate. In this way, the CO₂-footprint related to organic acid production and, consequently, LIB recycling, gets particularly favorable due to the effective bioconversion of carbon dioxide to a black mass lixiviate (Figure 1). Additionally, *Acetobacterium woodii* belongs to biosafety level 1, which makes it an organism easy to handle with respect to safety in a production environment.

Surprisingly, it has been observed that the addition of a reducing agent during the depletion step is not required for bioleaching, while it is generally a prerequisite in metal extraction when using mineral or organic acids. This observation makes the bioleaching process less complex and reduces costs.

Another surprising effect associated with the present invention is the observation that the process allows to reduce the amount of organic acids required to deplete the metals from batteries when compared with a chemical extraction process based on the pure organic acids. This indicates on one hand that the present bioleaching process follows a different mechanism than chemical leaching. On the other hand, it makes the process more cost effective.

### BLACK MASS

While the process according to the invention is principally useful for leaching all types of batteries, the focus lies on lithium ion batteries containing particularly lithium, cobalt, manganese, nickel, copper, aluminium and iron. Of particular interest is the selective extraction of the critical elements lithium and cobalt.

Black mass suitable to perform the process can be generated in different ways. The two most important ways for black mass generation are: (a) pyrometallurgical treatment of batteries and (b) mechanical disassembly and treatment of batteries. Black mass as prepared by (a) usually only contains low amounts of lithium as this element is lost during thermal treatment. For this reason, black mass as obtained by (b) is used in a preferred embodiment of the invented process.

In a preferred embodiment according to the invention, the black mass is obtained by mechanical disassembly and mechanical treatment of batteries with and without high temperature treatment. In a more preferred embodiment according to the invention, black mass is obtained by mechanical disassembly and mechanical treatment of batteries.

### MICROORGANISMS

The selection of suitable microorganisms has been carried out on basis of about 2.000 species from public and proprietary microbial strain collections. The microorganisms disclosed by this invention are superior compared to other bioleaching organisms with respect to their ability to produce high titers of suitable organic acids or other complexing agents and to possess an exceptional metal tolerance.

Microorganisms selected for this invention comprise species of: *Actinobacillus succinogenes, Mannheimia succiniciproducens, Ruminococcus flavefaciens, Anaerobiospirillum succiniciproducens, Propionibacterium sp., Pectinatus sp., Escherichia coli, Bacteroides sp., Bacteroides amylophilus, Prevotella ruminicola, Succinimonas amylolytica, Succinivibriodex trinisolvens, Wolinella succinogenes, Cytophaga succinicans, Aspergillus fumigatus, Aspergillus niger, Aspergillus flavus, Aspergillus aculeatus, Aspergillus awamori, Aspergillus foetidus, Aspergillus carbonarius, Aspergillus oryzae, Aspergillus wentii, Penicillium expansum, Penicillium viniferum, Penicillium janthinelum, Penicillium luteum, Byssochlamys nivea, Lentinus degene, Paecilomyces varioti, Saccharomyces cerevisiae, Saccharomycopsis lipolytica, Ustilago trichophora, Thermobifida fusca, Aureobasidium pullulans, Candida glabrata, Candida oleophila, Candida albicans, Candida tropicalis, Candida guilliermondii, Candida parapsilosis, Candida citroformans, Bacillus subtilis, Bacillus pumilus, Bacillus licheniformis, Bacillus megaterium, Arthrobacter paraffinens, Arthrobacter sp., Bravibacterium sp., Klebsiella sp., Corynebacterium sp., Rhodococcus sp., Alcaligenes levotartaricus, Acinetobacter tartaricus, Pseudomonas agrobacterium, Pseudomonas striatal Pseudomonas fluorescens, Nocardia tartaricans, Agrobacterium sp., Rhizobium sp., Klebsiella sp., Cryptococcus sp., Achromobacter sp., Flavobacterium sp., Hansenula, Fusarium sp., Mucor sp., Gliocladium sp., Acetobacter sp., Ustilago sp., Zymomonas mobilis, Ketogulonicigenium vulgare, Xanthomonas campestris, Gluconobacter oxydans, Zygosaccharomyces bailii, Zymomonas mobilis, Burkholderia mallei, Burkholderia glumae, Paxillus involutus, Sclerotinia sclerotiorum, Tyromyces palustris, Coriolus versicolor, Phanerochaete chrysosporium, Sclerotium rolfsii, Fomes annosus, Tyromyces palustris, Clostridium sp., Moorella thermoacetica, Pichia sp.,* and particularly *Ustilago trichophora* CBS 131473, and *Acetobacterium woodii DSM1030, Lactobacillus sp., Carnobacterium sp., Leuconostoc sp., Weissella sp., Corynebacterium sp., Lactococcus sp., Vagococcus sp., Aerococcus sp., Tetragenococcus sp., Oenococcus sp., Marinilactibacillus sp., Alkalibacterium sp., Microbacterium sp., Exiguobacterium sp., Oceanobacillus sp., Streptococcus sp., Enterococcus sp., Pediococcus sp., Sporolactobacillus sp., Halolactibacillus sp., Bacillus coagulans, Enterobacter aerogenes, Rhizopus sp., Candida sonorensis, Kluyveromyces marxianus, Schizosaccharomyces pombe.*

As mentioned above, these microorganisms show a surprising behavior in metal extraction from black mass, since they allow conducting the depleting step at lower concentrations than with purified, abiotic organic acid preparations.

Additionally, organisms that allow to produce organic acids based on carbon dioxide fixation actively reduce the net CO₂-footprint of the process, thereby increasing the sustainability of the invented battery recycling approach.

Other than with known hydrometallurgical techniques, microbial bioleaching can be used to selectively leach targeted metals.

In a preferred embodiment according to the invention, the microorganisms are selected from microorganisms which produce organic acids and/or complexing agents.

In a most preferred embodiment according to the invention, the microorganisms are selected from the group consisting of *Ustilago trichophora* CBS 131473 or *Acetobacterium woodii DSM1030.*

### CULTIVATION CONDITIONS AND MEDIUM

The present invention involves two alternatives:
(i) (direct) one-step bioleaching or
(ii) (indirect) two-step bioleaching.

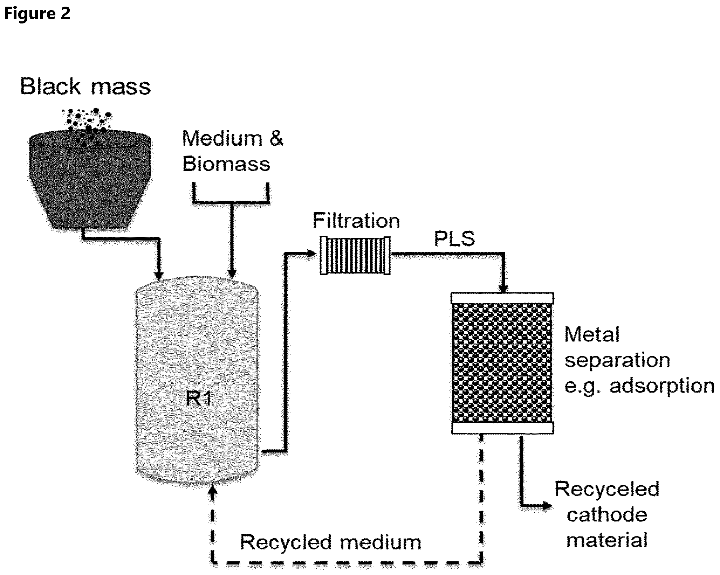

**One-step bioleaching** means that a slurry of black mass is brought into contact with the microorganism. The most suitable solvent for this purpose is tap water. Either the microorganism is already dispersed in a nutrient solution or the nutrient components or nutrient solution are added separately. The characteristic of said one-step bioleaching process is that the microorganisms produce and release organic acids, complexing agents or reducing agents during the bioleaching process (Figure 2).

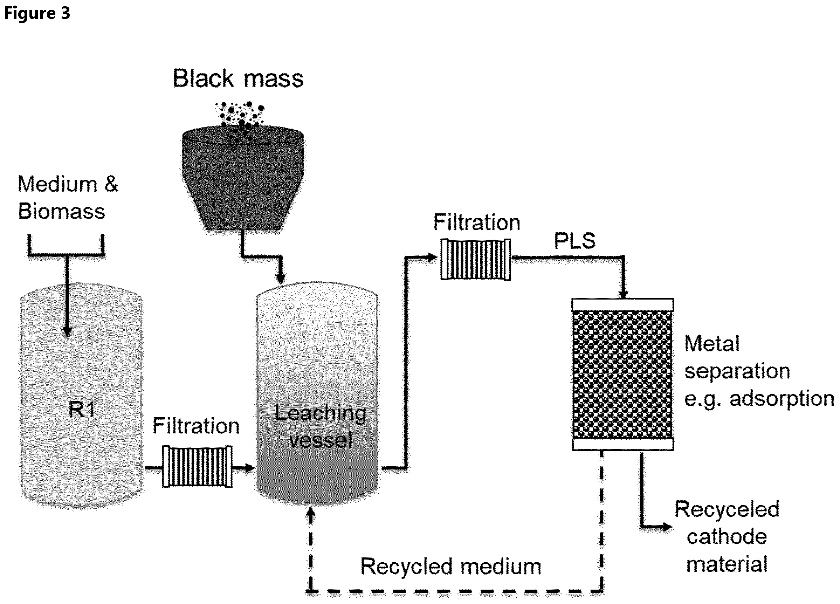

The alternative invention, **two-step bioleaching** means that the microorganism is cultivated first in a nutrient solution to produce and release organic acids, complexing agents or reducing agents, and said solution, either directly or after removal of the microorganism, with remaining nutrients and organic acids or other complexing agents is contacted with the black mass (Figure 3). In this setup, said solution may be concentrated first by methods known in the art before it is added to the black mass.

Suitable nutrient compositions are well-known from the prior art and contain minerals, trace elements and a carbon source such as carbon dioxide or carbohydrates, which are required for cultivating and growing the microorganisms. The absence of external electron acceptors such as oxygen or nitrate in the nutrient broth is advantageous.

In a preferred embodiment according to the invention, the black mass is added to a solvent to form a slurry, before it is contacted with said culture of microorganisms or the cell-free supernatant of said culture of microorganisms.

### CONCENTRATION

In two-step bioleaching, the solution used to mediate the depleting step is prepared by cultivation of microorganisms in a nutrient solution. Before application in bioleaching, said solution may be depleted of microorganisms and / or said solution may be concentrated by methods known in the art to make the subsequent depleting step more effective. Said concentration step may, for example, rely on reverse osmosis, vaporization, centrifugation, diafiltration, membrane electrolysis, reactive liquid-liquid extraction, electrochemical pH-Swing Extraction or precipitation, sedimentation.

### DEPLETING STEP

Typically, the depleting or leaching step takes place in a stirred vessel. The black mass is added to water or any other suitable solvent to form a slurry and is pumped into the reactor. Usually, the slurries show a solid matter content of about 0.1 to about 80 % (w/v), preferably of about 1 to about 70 % (w/v) and more preferably of about 2.5 to about 50 % (w/v).

It is also desirous conducting depletion within a pH range of from about 1 to about 10. In a preferred embodiment, the depletion step (step (d)) is carried out within a pH range of from about 2 to about 9, preferably within a pH range of from about 3 to about 8.

In a further preferred embodiment the process is started at a pH of about 7 to increase growth of the microorganisms and later shifted step by step towards lower values to increase the yields. For the purpose of pH adjustment, organic acids or mineral acids such as hydrochloric acid, sulfuric acid, nitric acid or phosphoric acid may be used.

In one-step bioleaching, the microorganisms can be added as dry biomass or as a suspension or pulp. Also the nutrients can be added, either separately or as a premix together with the biomass. Typically, leaching requires an amount of microorganisms (cell dry weight, cdw) in the range of 0.01 to about 10 % by weight, preferably about 0.1 to about 5 % (w/v) and particularly about 0.5 to about 5 % (w/v) - calculated based on the amount of black mass that needs to be depleted from its metals.

In two-step bioleaching, a solution prepared by the cultivation of microorganisms in a nutrient solution can be added. Said solution may have been obtained by removal of microorganisms after cultivation and / or a concentration step.

Bioleaching is conducted at a temperature slightly depending on the nature of the microorganisms, typically within a range of from about 20 to about 80 °C, preferably at temperatures of from 25 to 35 °C according to the working optimum of the microorganisms. Typically, bioleaching takes place under mixing, e.g. by stirring, optionally the reactor is aerated. To achieve a sufficient degree of depletion, bioleaching typically requires a reaction time of about 0.5 to about 48 hours, and preferably about 1 to about 12 hours.

Bioleaching may be enhanced by adding reducing agents during the depleting step, for example hydrogen peroxide, iron, Na₂S₂O₅, sucrose, glucose, oxalic acid, ascorbic acid, glutaric acid, SO₂, copper, lignite, some organic materials, such as tea leaves, FeSO₄ or scrap iron.

### SEPARATION

Once bioleaching is completed, the mixture can be transferred into a separation unit. In its easiest embodiment the separation takes place in a tank by gravity. More efficient are filtration units, in particular filter presses, which are available in different forms, for example as recessed, manual or automatic filter presses. An alternative is the use of centrifuges / plate separators or cyclone separators.

In case the process is conducted in a continuous manner, also pressure-forced filtration could be of advantage, although more cost-intensive. For example, diafiltration represents a suitable alternative, where the slurry is separated from the liquid phase by means of membranes made of ceramics, steel or polymers.

It is also possible to add further additives for facilitating separation such as redox-modulators (e.g. hydrogen peroxide) or flocculation agents such as poly acrylates, alginates, starches, sugars and the like.

### RECOVERY

In order to recover the metals depleted from the black mass by bioleaching, the liquid phase can be transferred into a recovery unit. Metal recovery from the liquid phase can then be carried in known manner. In hydrometallurgical battery recycling, single element compounds are recovered from the PLS for example by precipitation, solvent extraction, ion exchange resins or electrowinning/electroextraction. The single element compounds or mixtures of selectively leached metals can then be used in applications other than LIB manufacturing ("re-use/downgrading") or they are high-purity precursors or even active materials for manufacturing new LIBs ("true recycling").

Recovery can also be carried out via a pH shift to a gradually more alkaline pH up to 14, i.e. by addition of Na₂CO₃ or NaOH. This will sequentially precipitate individual metals as insoluble carbonates or hydroxides, containing preferably cobalt, manganese, nickel or lithium or a combination thereof.

In a preferred embodiment of the invention, the recovery of depleted metals is carried out by biosorption. Biosorption describes a process in which microbial cells recover dissolved metals, metal complexes or nanoparticles via adsorption to their cell surface or via active intracellular accumulation. Microorganisms, suitable for this process, are able to selectively recover pure metal compounds or mixtures thereof, preferably comprising one or more elements out of the group of lithium, cobalt, nickel, copper or manganese.

### SYSTEM

A further embodiment of the present invention refers to a system for recovering metals from batteries, comprising or consisting of the following parts:
(i) a reactor, preferably a stirred, aerated vessel, capable of sustaining microbial growth and bioleaching black mass
(ii) a separation unit, capable of separating the depleted solid residue from the liquid phase
(iii) a recovery unit suitable to recover the dissolved metal complexes from the liquid phase.

In a preferred embodiment according to the invention, the system described above is used for one step bioleaching of lithium ion batteries.

Preferably, the system additionally comprises a second reactor, preferably stirred, suitable for bioleaching of black mass. Preferably, the system additionally comprises a concentration unit, capable of concentrating cultures of microorganisms or cell-free culture supernatants.

An even more preferred embodiment of the present invention refers to a system comprising or consisting of the following parts:
(i) a first reactor, preferably a stirred, aerated vessel, capable of sustaining microbial growth and the production of organic acids, complexing agents or reducing agents
(ii) optional: a concentration unit, capable of concentrating cultures of microorganisms or cell-free culture supernatants
(iii) a second reactor, preferably stirred, suitable for bioleaching of black mass
(iv) a separation unit, capable of separating the depleted solid residue from the liquid phase
(v) a recovery unit suitable to recover the dissolved metal complexes from the liquid phase.

In a preferred embodiment according to the invention, the system described above is used for two step bioleaching of lithium ion batteries.

The reactor used for one-step bioleaching can either be used in batch or fed-batch mode in the cell propagation phase. In the bioleaching phase a perfusion system ensures retention of microbial cells and other particles in the reactor, while constantly feeding fresh nutrients to the reactor and withdrawing culture supernatant or bioleaching solution, respectively.

The In two-step bioleaching, cell propagation takes place in the first step under conditions especially developed for this purpose. Again, batch or fed-batch mode fermentations are possible. Separated in time and space from cell propagation, bioleaching takes place under conditions optimized for this second step. In a perfusion reactor setup, the continuous supply of a nutrient solution is switched to the supply of a nutrient solution optimized for formation of a bioleaching solution after a desired cell density is reached. The continuously produced and withdrawn cell-free culture broth is stabilized and used in a second step for bioleaching. The continuous exchange of culture supernatant avoids disturbance of cell growth by product inhibition and ensures a prolonged use of the producing biomass.

### EXAMPLES

### EXAMPLE 1: Comparison of leaching with microbially produced supernatant from Acetobacterium woodii vs. inorganic and organic acids

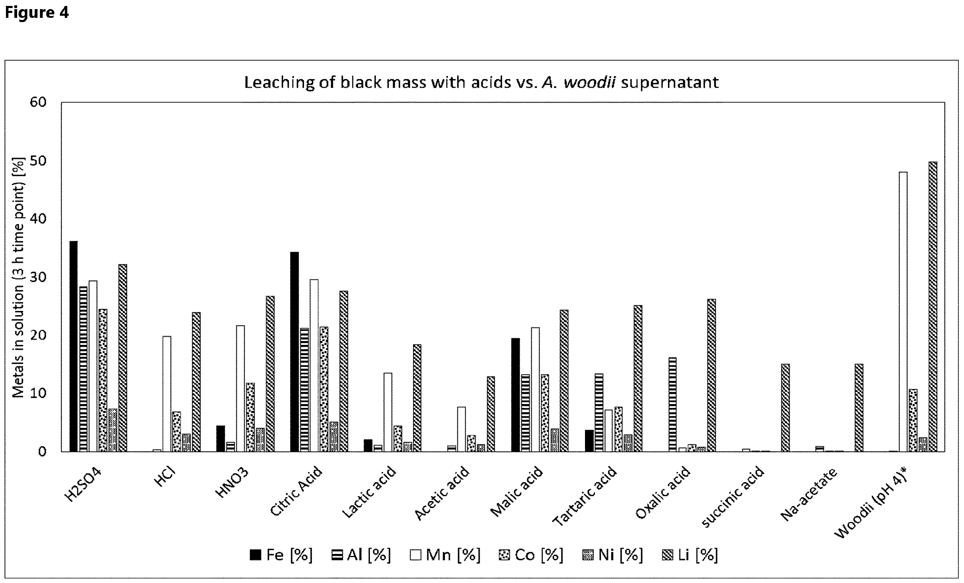

Supernatants containing 622 mM acetate produced by *Acetobacterium woodii* were used to leach black mass material. These leaching results were compared to leaching rates with pure acids (conc. >95%) at the same molarity (Figure 4). For the leaching with culture supernatant, harvesting was done via centrifugation (8,000 rpm; 11,335 g) and sterile-filtration. The supernatant was acidified to pH 4 with 1.1% (v/v) H₂SO₄ and then contacted with 5% black mass for 3 h under constant stirring. Highest leaching rates were achieved with the culture supernatant for the elements Mn and Li (Figure 4).

### EXAMPLE 2: Comparison of leaching with malic acid vs. microbially produced supernatant from Ustilago trichophora

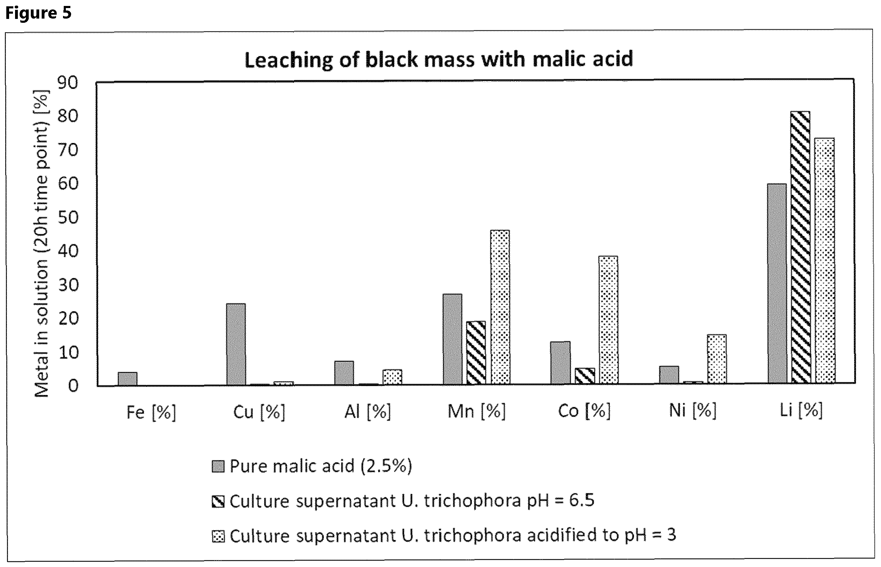

Supernatants containing malic acid were generated by growth of *Ustilago trichophora.* After sterilization, the supernatants were contacted with black mass material (10%) for 20 h and compared with pure malic acid (Figure 5). Leaching with the supernatant after harvest (pH = 6.5) is selective for Li recovery, whereas upon acidification to pH = 3, the leaching of other metals was enhanced.

### EXAMPLE 3: Reducing agent

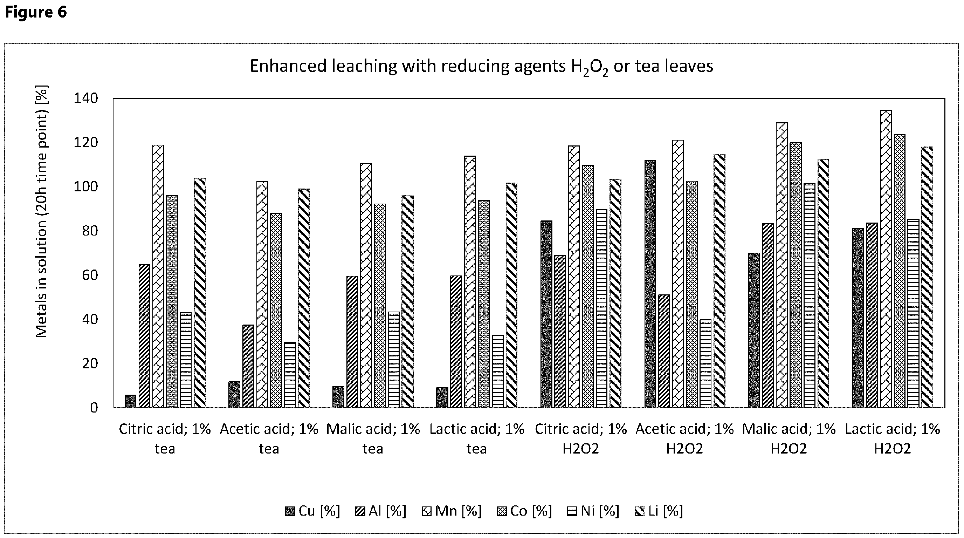

Leaching of black mass material can be increased when a reducing agent is added, see [0047]. In an example tea leaves and H₂O₂ were used to leach black mass in combination with a range of organic acids (Figure 6), by what leaching could be considerably enhanced compared to when no reducing agent was added (Figure 4).

### EXAMPLE 4: Cultivation of Ustilago trichophora

*Ustilago trichophora* (available from CBS No. 131473) is grown as a preculture in 50 mL preculture medium in a 500 mL flask without baffle.

Composition of the preculture medium: 46.6 mL/L crude glycerol (93% (w/v)), 1.6 g/L NH₄Cl, 500 mg/L KH₂PO₄, 197 mg/L MgSO₄ * 7H₂O, 19.5 g/L MES, 13 mg/L FeSO₄ * 7 H₂O, 0.05 mg/L Biotin, 1 mg/L Calcium-D(+)-pantothenate, 1 mg/L Nicotinic acid, 25 mg/L myo-Inositol, 1 mg/L Thiamine HCI, 1 mg/L Pyridoxine HCI, 0.2 mg/L 4-Aminobenzoic acid, 15 mg/L EDTA, 4.5 mg/L ZnSO₄ · 7 H_{2O}, 1.03 mg/L MnCl₂ · 4 H_{2O}, 0.3 mg/L CoCl₂ · 6 H₂O, 0.3 mg/L CuSO₄ · 5 H_{2O}, 0.4 mg/L Na₂MoO₄ · 2 H₂O, 4.5 mg/L CaCl₂ · 2 H₂O, 1 mg/L H₃BO₃, 0.1 mg/L Kl; pH 6.5.

For inoculation, 1.1 mL of a cryopreserve is sterilely transferred into the preculture medium. The optical density measured at 600 nm (OD) after inoculation of 50 mL preculture is 0.018. Cultivation occurs for roughly 22 h at 30°C, 2.5 cm deflection, 250 rpm in a shaking flask without baffles to an OD of roughly 2-3. The cryopreserve is a cultivation under conditions described above, which is portioned when an OD600 of 2 is reached. To do this, each 600 µL of culture is mixed with 600 µL of 30 % glycerol and stored at -80°C.

### EXAMPLE 5: Production of malic acid with Ustilago trichophora using the substrate crude glycerol in a fed-batch process or alternatively continuous perfusion process with ceramic-membrane-module in 1 liter fermentation scale

Composition of the preculture medium: see example 4.

Composition of the fermentation medium for fed-batch and perfusion process: 161.3 g/L crude glycerol, 8 g/L NH₄Cl, 1 g/L KH₂PO₄, 394 mg/L MgSO₄ * 7H₂O, 0.1 mg/L biotin, 2 mg/L calcium-D(+)-pantothenate, 2 mg/L nicotinic acid, 50 mg/L myo-Inositol, 2 mg/L thiamine HCI, 2 mg/L Pyridoxine HCI, 0.4 mg/L 4-aminobenzoic acid, 30 mg/L EDTA, 9 mg/L ZnSO₄ · 7 H₂O, 2.06 mg/L MnCl₂ · 4 H₂O, 0.6 mg/L CoCl₂ · 6 H₂O, 0.6 mg/L CuSO₄ · 5 H₂O, 0.8 mg/L Na₂MoO₄ · 2 H₂O, 9 mg/L CaCl₂ · 2 H₂O, 6 mg/L FeSO₄ · 7 H₂O, 2 mg/L H₃BO₃, 0.2 mg/L Kl, 20 mg/L * 7H₂O.
Composition of Feed I: 964 g/L crude glycerol in water
Composition of Feed II: 118 g/L crude glycerol in water

Fermentation: A 1 L fermentation-vessel (e.g. Biostat Qplus Sartorius) is prepared according to the fermenter operating instructions. For the perfusion mode, an external circuit, into which the perfusion module is integrated, must be established. In a simple fed-batch fermentation Feed I starts 10 hours after inoculation with a constant flow rate of 4 g/h. In contrast for the perfusion mode, Feed I is added with a constant flow rate of 6.6 g/h. Perfusion mode is activated 73 h after the beginning of the fermentation or when the concentration of malic acid is between 45-50 g/L. At malic acid concentrations higher than 50-60 g/L, product inhibition is observed. When perfusion filtration starts, Feed I is turned off and will be replaced by Feed II. The flow rates are 26 mL/h for Feed II and 28 mL/h for the filtrate. The cell cycle has a constant flow rate of 130 mL/min.

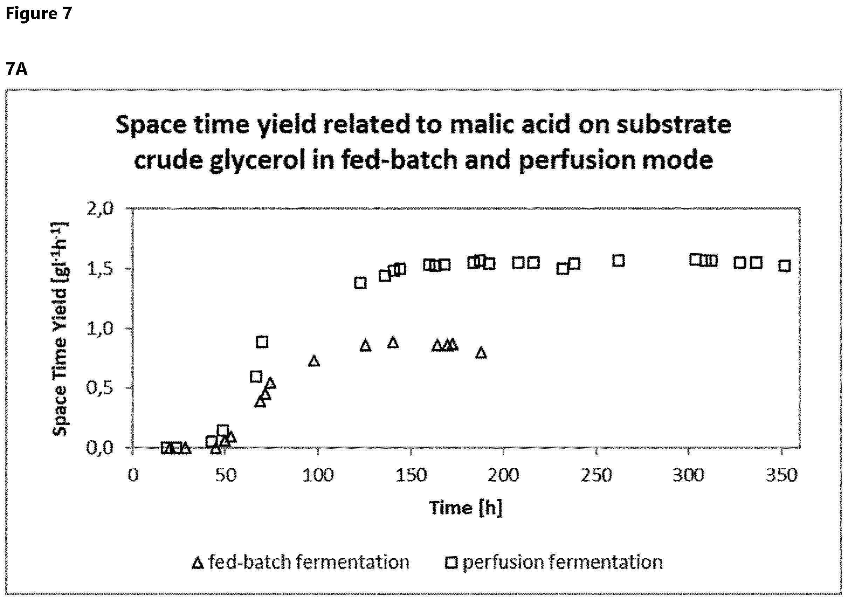

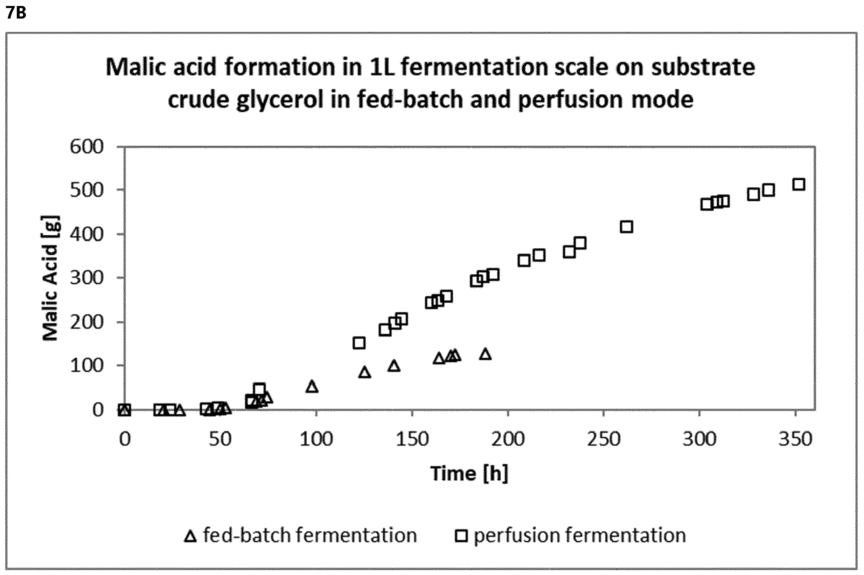

Under these conditions, a product formation rate of 0.9 g/L/h malate was achieved in fed-batch mode and 1.5 g/L/h in perfusion mode. In this in fed-batch mode, a total amount of 129 g malic acid was formed in 188 h (513 g malic acid in 352 h in perfusion mode; Figure 7A and B).

### EXAMPLE 6: Production of malic acid with Ustilago trichophora using the substrate sugar beet syrup in fed-batch and perfusion fermentation

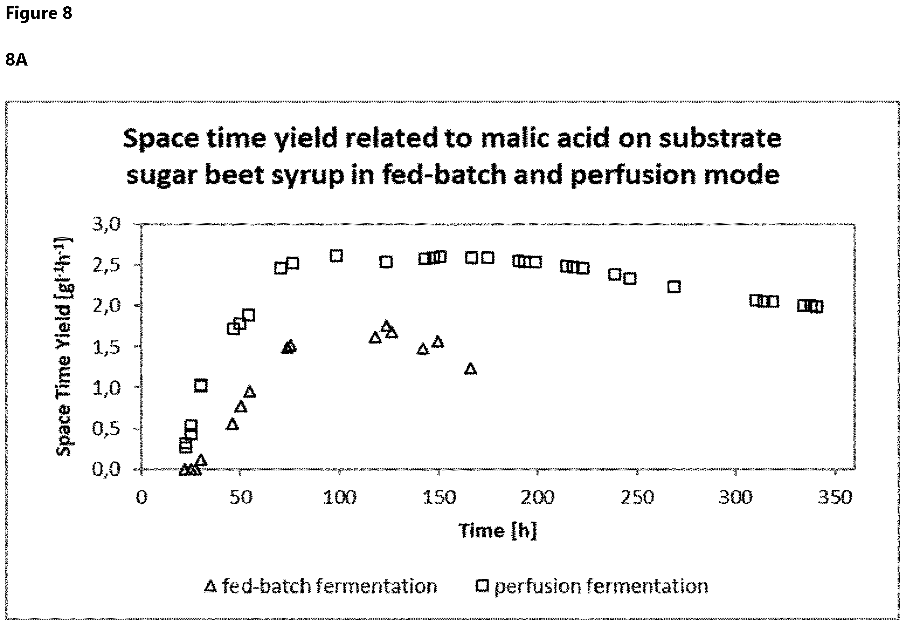

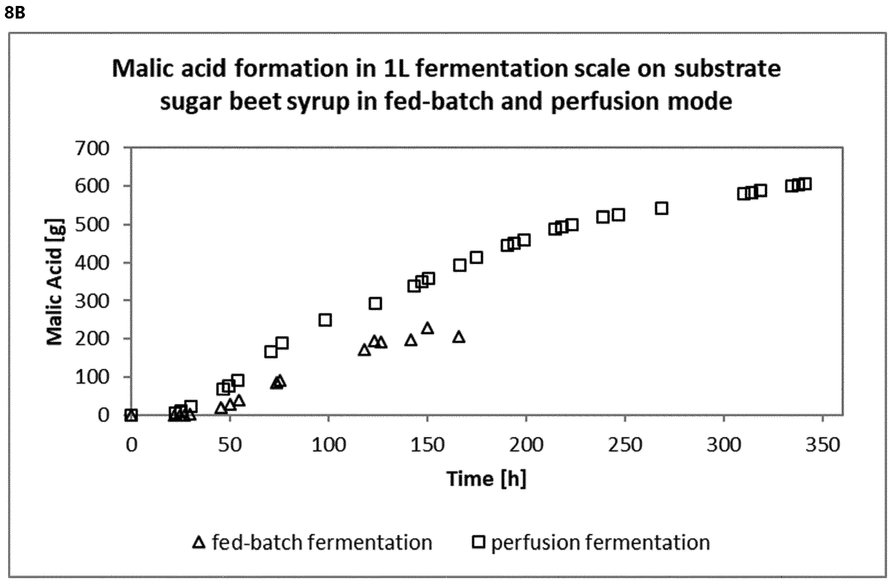

Fermentation medium composition as described in Example 5. 100 % sugar beet syrup is used instead of crude glycerol to achieve an initial concentration of 150 g/L of sucrose. In fed-batch mode the feed rate was 3.3 g/h in 1 L fermentation scale. For perfusion mode, Feed I rate is about 5 g/h, feed II rate is about 3.5 g/h. Under these conditions, a product formation rate of 1.7 g/L/h malate was achieved in fed-batch mode and 2.6 g/L/h in perfusion mode. In this way, a total amount of 228 g malic acid was formed in 150 h in fed-batch mode (607 g malic acid in 341 h in perfusion mode; Figure 8A and B).

### EXAMPLE 7: Production of malic acid with Ustilago trichophora using the substrate acetate in a fed-batch process

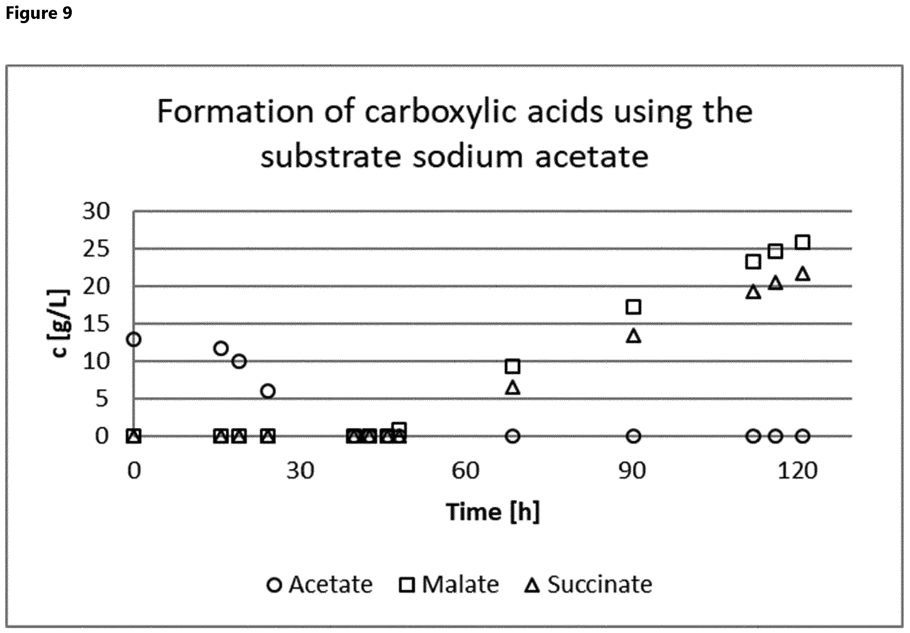

Fermentation medium composition as described in Example 5. 15 g/L sodium acetate trihydrate is used instead of crude glycerol. Feed rate is 105 mg/h in a 1 L fermentation scale. Under these conditions, product formation rates of 0.3 g/L/h malate and 0.3 g/L/h succinate were achieved (Figure 9).

## Claims

1. A method for recovering metals from batteries comprising or consisting of the following steps:
(a) providing black mass prepared from spent batteries;
(b) providing a culture of microorganisms obtained by using suitable carbon sources to support growth and the production of organic acids, complexing agents or reducing agents;
(c) bringing said black mass into contact with said culture of microorganisms or the cell-free supernatant of said culture of microorganisms;
(d) depleting said black mass from metals contained therein by bioleaching;
(e) separating the depleted black mass from the liquid containing the dissolved metals to obtain a pregnant leach solution;
(f) recovering the extracted metals from said pregnant leach solution.

2. The method according to claim 1, wherein the black mass is prepared from lithium ion batteries.

3. The method according to claim 1 and/or 2, wherein the black mass is obtained by mechanical disassembly and mechanical treatment of batteries with and without high temperature treatment.

4. The method according to claim 3, wherein the black mass is obtained by mechanical disassembly and mechanical treatment of batteries.

5. The method according to any of the preceding claims, wherein the black mass is added to a solvent to form a slurry, before it is contacted with said culture of microorganisms or the cell-free supernatant of said culture of microorganisms.

6. The method according to claim 5, wherein the slurry has a solid matter content of about 0.1 to about 80 % w/w, calculated on the total weight of the slurry.

7. The method according to any of the preceding claims, wherein the depletion step (step (d)) is carried out within a pH range of from about 1 to about 10.

8. The method according to any of the preceding claims, wherein the depletion step (step (d)) is carried out within a pH range of from about 2 to about 9, preferably within a pH range of from about 3 to about 8.

9. The method according to any of the preceding claims, wherein reducing agents are added during the depleting step (step (d)), the reducing agents being selected from the group consisting of hydrogen peroxide, iron, Na₂S₂O₅, sucrose, glucose, oxalic acid, ascorbic acid, glutaric acid, SO₂, copper, lignite, some organic materials, such as tea leaves, FeSO₄ or scrap iron.

10. The method according to any of the preceding claims, wherein the recovering step (step (f)) is carried out via biosorption.

11. The method according to any of the preceding claims, wherein the microorganisms are selected from microorganisms which produce organic acids and/or complexing agents.

12. The method according to claim 11, wherein the microorganisms are selected from the group consisting of *Ustilago trichophora* CBS 131473 or *Acetobacterium woodii DSM 1030.*

13. A system for conducting the process according to claim 1, comprises the following parts:
(i) a reactor, preferably a stirred, aerated vessel, capable of sustaining microbial growth and bioleaching black mass;
(ii) a separation unit, capable of separating the depleted solid residue from the liquid phase
(iii) a recovery unit, suitable to recover the dissolved metal complexes from the liquid phase.
(iv)

14. The system according to claim 13, wherein the system additionally comprises a second reactor, preferably stirred, suitable for bioleaching of black mass.

15. The system according to claim 13 and/or 14, wherein the system additionally comprises a concentration unit, capable of concentrating cultures of microorganisms or cell-free culture supernatants.
